# EUROPEAN PATENT APPLICATION

(11) **EP 2 110 700 A1**
(43) Date of publication of application: **21.10.2009**
(21) Application number: 08200015.9
(22) Date of filing: 14.04.2008
(51) Int. Cl.: G02B 27/01, B32B 37/12

(54) **Lamination of optical substrates**

(71) Applicant: BAE Systems PLC, London SW1Y 5AD (GB)
(72) Inventor: The designation of the inventor has not yet been filed

(57) **Abstract**

A method is provided for laminating optical substrates and in particular for manufacturing a thin combiner for an optical display that preserves the flatness of the component parts and ensures an even separation of layers, in particular an optical substrate (100) and a thin cover plate (135) that is to be bonded to the substrate. In the method, spacer particles (130) in a predetermined size range are included within a glue layer at a required density to ensure cover plate flatness and uniform separation during assembly.

## Description

This invention relates to a method for manufacturing thin laminated optical substrates and in particular, but not exclusively, for manufacturing a thin combiner for a display apparatus. The present invention is particularly applicable in the manufacture of combiners for use in holographic and other forms of laser display apparatus.

From a first aspect, the present invention resides in a method for manufacturing a combiner for a display device, wherein the combiner comprises a flat optical substrate, a cover plate and a grating layer applied to the flat optical substrate or to the cover plate, the method comprising the steps of:
(i) applying a predetermined volume of glue to a bonding surface of the optical substrate;
(ii) applying a plurality of spacer particles of sizes within a predetermined size range onto the bonding surface of the optical substrate;
(iii) bringing the cover plate into contact with the glue such that the weight of the cover plate causes the glue to spread uniformly over the bonding surface of the flat optical substrate to form said layer of glue and whereupon said cover plate is separated from said flat optical substrate by said plurality of spacer particles; and
(iv) curing the glue.

In known techniques for assembling combiners for displays, it is difficult to achieve a required degree of flatness and uniformity of separation between an optical substrate and a cover plate of the combiner. The present invention provides for a particularly simple technique for ensuring the flatness and uniformity of separation of layers within the combiner during manufacture.

Preferably, the predetermined volume of the glue is deposited initially as a plurality of discrete drops onto a central region of the optical substrate and permitted to spread over the surface of the optical substrate under the weight of the cover plate to form the layer of glue. In particular, the plurality of discrete drops are deposited substantially along a centre-line of the optical substrate.

The spacer particles may be deposited onto the surface of the optical substrate before the glue is permitted to spread and/or the spacer particles may be mixed with the glue before the glue is deposited onto the optical substrate.

Besides depositing discrete drops, preferred techniques for applying the glue include spin-coating the glue onto the optical substrate or onto the cover plate, with or without the spacer particles pre-mixed within the glue.

The spacer particles are preferably substantially spherical. However, rod-shaped spacer particles may be used alternatively or in addition to spherical particles. In some cases, rod-shaped spacers have been found to be less visible within the glue layer than spherical spacers. However, to minimise the visibility of spacer particles within the layer of glue, the material for the spacer and the glue are chosen to have substantially equal refractive indices.

Preferably, the spacer particles are made from plastic or from glass. However, plastic spacers tend to spread with the glue more readily than glass spacers. This makes the initial manner of deposit of plastic spacer particles onto the optical substrate less critical to the eventual distribution of spacers through the layer of glue than if using glass spacer particles.

In a preferred embodiment, the spacer particles comprise glue drops of a predetermined volume that have been deposited onto the surface of the optical substrate, or of the cover plate, and cured. This has the benefit that if the same glue type is used for both the layer of glue and the spacers, there should be very little visibility of the spacers in the finished layer of glue. In this embodiment the glue spacers are deposited by means of a printing device, similar to an inkjet printer adapted to deposit micro-droplets of a liquid substance into a surface at predetermined positions and hence with predetermined spacing.

Preferred glue types are ultra-violet curing. However, thermosetting glues may also be used for the glue spacers and/or the layer of glue.

Preferred spacer particle sizes are in the range of 45 to 50µm. However, larger spacer particles may be used. In general, it has been found that use of spacer particles of this size or larger results in fewer bubbles forming as the glue spreads than if smaller spacers were used. However, the range of spacer particle sizes varies preferably by no more than 5µm to ensure a required degree of flatness and uniformity of separation of the cover plate and optical substrate layers. Achievement of the required flatness is assisted by supporting the optical substrate on a flat reference slab during manufacture of the combiner. Preferably, spacers similar to those used within the glue layer may be placed between the optical substrate and the flat reference slab in order to avoid entrapment of air or contact with unwanted particulate contamination present on the surface of the slab. Either occurrence would tend to disturb the flatness of the finished combiner assembly. Furthermore, the method preferably ends with the step of applying supplementary pressure evenly across the cover plate while curing the glue, for example using a vacuum press and a supplementary pressure of 2kPa or less.

A further contribution to combiner flatness is achieved by ensuring that the spacer particle density within the layer of glue does not drop below a certain predefined level, according to the thickness of the cover plate. For a typical 2mm cover plate, a maximum spacer particle separation of 25mm has been found sufficient to ensure a required flatness of the cover plate.

In a preferred embodiment, a bevelled edge is provided on each of the optical substrate and the cover plate so that when they come together the bevelled edges face each other and provide a channel for capturing glue emerging from the edges of the cover plate and for directing the emerging glue along the channel to regions where glue has not yet reached the edge of the cover plate.

From a second aspect, the present invention resides in a method for manufacturing an optical device, wherein the optical device comprises a first optical substrate layer and a second optical substrate layer, the method comprising the steps of:
(i) applying a predetermined volume of glue to a bonding surface of the first optical substrate layer;
(ii) applying a plurality of spacer particles of sizes within a predetermined size range onto the bonding surface of the first optical substrate layer;
(iii) bringing the second optical substrate layer into contact with the glue applied to the first optical substrate layer such that the weight of the second optical substrate layer causes the glue to spread uniformly over the bonding surface of the first optical substrate layer to form said layer of glue and whereupon said second optical substrate layer is separated from said first optical substrate layer by said plurality of spacer particles; and
(iv) curing the glue.

From a third aspect, the present invention resides in a combiner for a display device, comprising a flat optical substrate, a cover plate and a grating layer applied to the flat optical substrate or to the cover plate, wherein the cover plate is bonded to the flat optical substrate by means of a layer of glue containing spacer particles of sizes substantially within a predetermined size range, the thickness of the layer of glue is substantially within the predetermined size range of the spacer particles and the spacer particles are distributed within the layer of glue with a predetermined maximum spacing.

Preferably, to achieve a desired degree of flatness in the combiner, the predetermined spacer particle size range extends over no more than 5µm.

Whereas the present invention has been claimed in particular in the context of a combiner for a display device, the techniques recited above according to preferred embodiments of the present invention may be applied to the bonding of any multi-layer structure where it is important to achieve and maintain flatness and even spacing of layers. In particular, the present invention may be applied to the bonding of layers of the same or different thicknesses, of the same or different materials and of two or more layers, as would be apparent to a person of ordinary skill in the relevant art.

For the purposes of the present patent specification, the term "optical substrate" shall be interpreted to include: any optically transparent substance; any layer of one or more materials designed to be optically reflective or to be used as an optical waveguide; optically opaque layers; or any layer of material that has a role in an optical device to be manufactured using techniques according to preferred embodiments of the present invention.

Preferred embodiments of the present invention will now be described in more detail and by way of example only, with reference to the accompanying drawings of which:
Figure 1 shows, in a number of sectional and other views, the key stages in a manufacturing process for a combiner, according to preferred embodiments of the present invention;
Figure 2 shows, in section, part of the edge of a combiner in the latter stage of manufacture according to a preferred embodiment of the present invention; and
Figure 3 shows a small portion of the surface of a cover plate to which has been applied glue spacers according to a preferred embodiment of the present invention.

Maintaining or achieving flatness and uniformity of thickness are key requirements in the manufacture of "thin" combiners for optical displays. Failure to achieve flatness within predefined tolerances results in an unacceptable distortion of images reproduced by the combiner. A typical requirement is for the combiner to deviate from flatness by no more than a 5µm over an area 150mm wide. Furthermore, a manufacturing process should aim to minimise visual defects in the combiner and these requirements should be achievable consistently and at an acceptable cost. Preferred embodiments of the present invention have been shown to succeed in satisfying each of these requirements.

For the purposes of describing a first preferred embodiment of the present invention, a typical thin combiner will be taken to comprise an optical substrate layer having a "diffraction grating" layer applied to one face and a thin transparent cover plate that is to be bonded onto the substrate to cover and protect the diffraction grating layer, resulting in a thin, flat, laminate structure. Preferably both the optical substrate and the cover plate are made from glass, although other optically transparent materials of the same or different types may be selected to form a combiner of a similar structure.

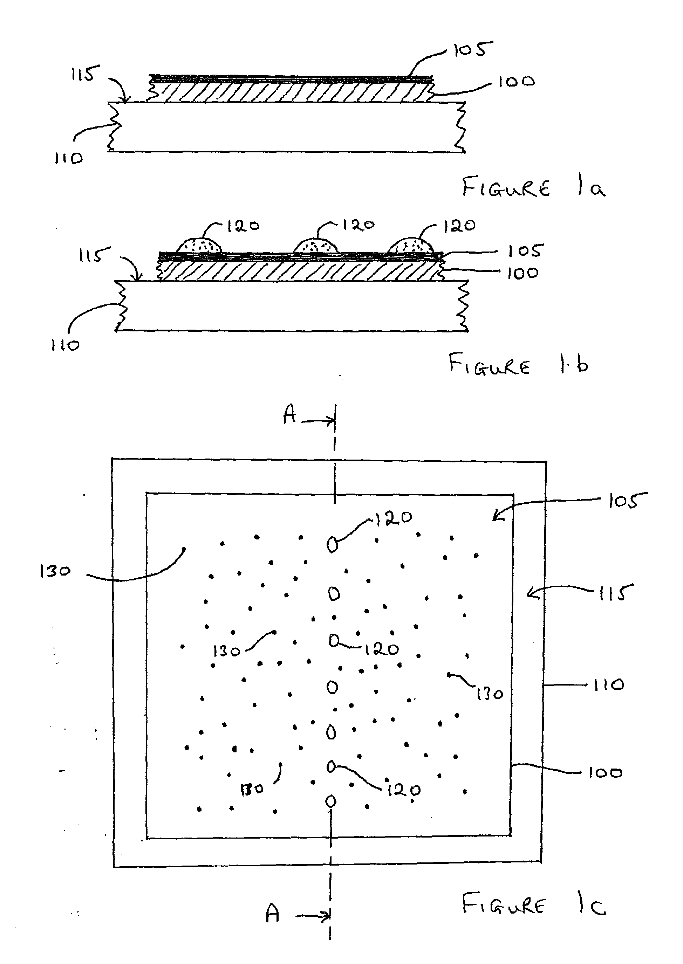

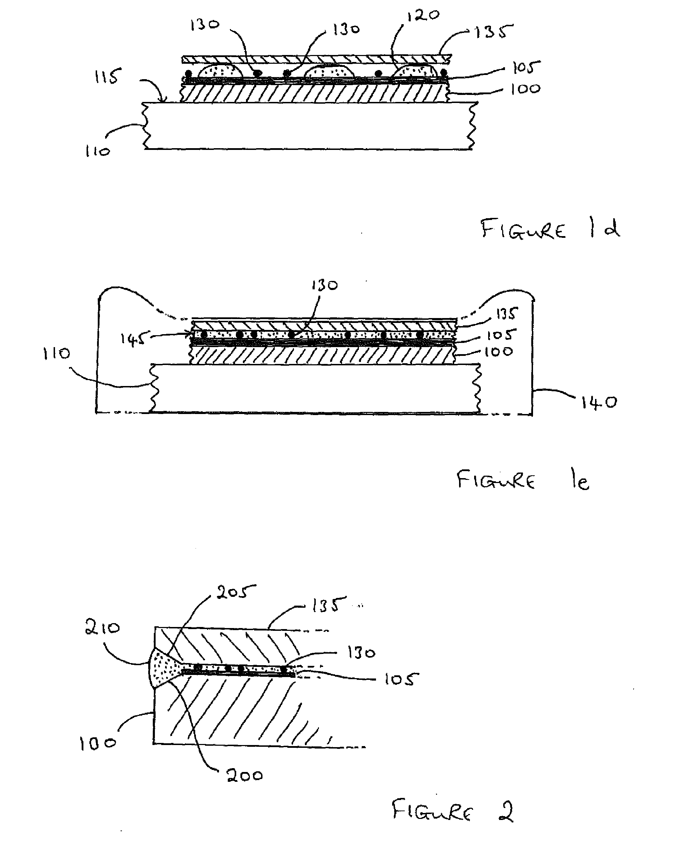

A four stage method for manufacturing a thin laminated combiner of the type summarised above will now be described with reference to Figure 1 according to a first preferred embodiment of the present invention. However it will be apparent to a person of ordinary skill in the relevant art that the method according to the present invention may be applied to the manufacture of a laminated structure comprising more than two layers.

Referring initially to Figure 1a, the starting point in the preferred method is an optical substrate 100, a small portion of which is shown in a sectional view in Figure 1a, to which has been applied a diffraction grating layer 105 (shown with exaggerated thickness in Figure 1a for ease of representation) on one surface of the substrate 100. A typical size for the optical substrate 100 is 260mm x 180mm. The diffraction grating layer 105 may comprise sub-layers of materials of different refractive indices to achieve the required diffraction effects. Other known forms of diffraction grating layer 105 may be provided on the surface of the substrate 100, as would be typical for a combiner for use in a laser display in particular. Such grating layers 105 may have either smooth surfaces or slightly roughened surfaces according to the type of diffraction grating layer 105 applied.

The optical substrate 100 is placed onto the flat upper surface 115 of a levelled slab of material 110 which provides a flat reference surface 115 to support the optical substrate 100 during each stage in the manufacturing method that now follows.

The first stage in the method comprises the application of glue to the surface of the diffraction grating layer 105.

Referring to Figure 1b, in a preferred glue application technique a predetermined volume of glue is deposited onto the surface of the diffraction grating layer 105 in a number of discrete deposits 120, shown for a small portion of the combiner in a sectional view in Figure 1 b. As few as three discrete deposits 120 have been found to provide for a good distribution of glue across the width of the combiner. A glue preferably having a viscosity in the range of 225-425 centipoise is used. Preferably, the glue deposits 120 are placed substantially along a centre line of the surface of the diffraction grating layer 105 and hence of the optical substrate 100. Referring additionally to Figure 1c, a line of glue deposits 120 can be more clearly seen in a top view of the surface of the diffraction grating layer 105 and the optical substrate 100. Preferably each of the glue deposits 120 are of a similar volume.

The second stage in the method comprises applying a scattering of spacer particles over the surface of the diffraction grating layer 105.

Referring again to Figure 1c, a "dusting" of spacer particles 130 can be seen to have been applied to the surface of the diffraction grating layer 105 with a substantially even density over that surface. However, it may be arranged for the density of spacer particles 130 to be applied with a higher density in the vicinity of the glue deposits 120. The spacer particles 130 are preferably plastic spheres of diameters in the range 45-50µm. Alternatively, short glass rods may be used in the same diameter range. However, other materials such as soda glass may be used for the spherical spacer particles 130, though with a slightly higher risk of damage to the diffraction grating layer 105 during this and the next stage in the method as the particles tend to sink into contact with the grating layer 105 as the glue spreads.

Preferably, the refractive index of the material selected for the spacer particles 130 is similar to the refractive index of the glue. This will help to reduce the visibility of the spacer particles 130 in the glue in the final combiner.

The third stage in the method comprises lowering a thin cover plate onto the prepared surface of the diffraction grating layer 105 and enabling it to settle onto the glue deposits and the spacer particles under gravity, but without relative lateral movement between the cover plate and the optical substrate 100.

Referring to Figure 1d, a sectional view is provided of a small portion of the optical substrate 100 and the grating layer 105 at the stage reached after stage two, as represented in Figure 1c, taken through the plane A-A shown in Figure 1c. A thin cover plate 135 of the same area and shape as the optical substrate 100 is shown which has been lowered into contact, firstly, with the glue deposits 120 and then subsequently, as the glue spreads, with the spacer particles 130, such that the cover plate 135 remains substantially parallel to the surface of the diffraction grating layer 105 and the optical substrate 100 as the glue spreads outwards from the initial deposits 120 under the weight of the cover plate 135. Preferably this third stage in the process is performed in a dedicated jig (not shown in Figure 1) which not only controls the placement of the cover plate 135 onto the prepared optical substrate 100 of Figure 1c, but also ensures that there is very little relative lateral movement between the cover plate 135 and the optical substrate 100 and grating layer 105, the latter to minimise the risk of damage to the grating layer 105.

The inventors have found it preferable, at stage two above, to deposit some of the predetermined volume of glue onto the underside of the cover plate 135, as drops smaller that the glue deposits 120, in positions corresponding to the glue deposits 120 on the optical substrate 100 or grating layer 105. Thus, when the cover plate 135 is lowered, the first contact is between the glue drops on the cover plate 135 and the glue deposits 120 on the optical substrate 100 or grating layer 105 below. This technique reduces the likelihood of bubble formation when the cover layer 135 is first lowered into position.

The cover plate 135 is allowed to settle under gravity and to thereby apply light pressure to the glue deposits 120 such that they begin to spread over the surface of the diffraction grating layer 105. Besides the force of gravity acting on the cover plate 135, spreading of the glue may also be assisted by surface tension in the edge of the spreading glue layer, in particular if a wetting agent such as a silane monolayer is first applied to the surface of the diffraction grating layer 105 and/or of the cover plate 135. However, surface tension can also tend to hinder spread of the glue, and viscosity of the glue always acts against the spreading action.

In general, the glue will eventually spread to the edges of the cover plate 135 under the weight of the cover plate 135 and due to the surface tension effects mentioned above. Preferably, the quantity of glue applied at the first stage is carefully measured to within ±5% of a target value which is itself approximately 10% greater than the volume of glue theoretically required to fill the gap between the cover plate 135 and the surface of the grating layer 105 for a given spacer particle size. This allows for extra space which may occur during spreading of the glue due to imperfections in the flatness or thickness of the cover plate 135. Preferably, when the glue has spread to the edge of the cover plate 135, the thickness of the glue layer is substantially equal to that of the size of the spacer particles 130 so that the cover plate 135 is prevented from settling further when it comes to rest on the spacer particles 130.

According to the choice of material for the spacer particles 130, the spacer particles 130 will be carried more or less within the spreading glue. Glass spacer particles 130 are relatively dense, settle onto the surface of the grating layer 105 then move very little as the glue spreads. An even dusting of glass spacer particles 130 at the dusting stage two is therefore critical to achieving the required density of spacer particles 130 in the final glue layer. However, plastic spacer particles 130 are close to neutrally buoyant in the glue and travel with it as it spreads so that they are dispersed throughout the glue layer by the time the glue reaches the edges of the cover plate 135. It is therefore preferable to mix plastic spacer particles 130 with the glue before it is deposited at stage one, besides pre-dusting the grating layer surface with spacer particles at stage two. Furthermore, when using plastic spacer particles 130, it may be arranged for the density of spacer particles 130 to be applied initially with a higher density in the vicinity of the glue deposits 120 in the knowledge that the spacer particles 130 will tend to spread to a more even density, carried by the glue as it spreads.

In aiming to minimise visibility of spacer particles 130 in the layer of glue, the use of fewer spacer particles 130 might be expected to achieve better results. However, if using fewer spacer particles 130, the method of applying them becomes more critical for the reasons discussed above.

The choice of spacer particle size, in this example in the range 45-50µm, and glue viscosity, preferably in the range 225-425 centipoise, has been found by the present inventors to reduce the formation of air bubbles in the spreading glue in comparison with other spacer particle sizes and glue viscosities, particularly smaller spacer particles 130. Use of larger spacers might be expected to further reduce the incidence of bubbles in the spreading glue. Furthermore, a slow-setting, preferably thermosetting glue has been chosen to ensure that sufficient time is available for the glue to spread to the edges of the cover plate 135. Preferably, a glue that cures under ultra-violet (UV) light is used to ensure more control over the process of glue spreading and subsequent curing.

The fourth stage in the method according to this first embodiment involves the application of supplementary pressure to the cover plate 135 and hence to the combiner to flatten it against the flat reference slab 110. This ensures , firstly, that the glue layer has completed spreading to the edges of the cover plate 135 to the thickness of the spacer particles so that the cover plate 135 is uniformly parallel to the optical substrate 100 and flat within the preferred 5µm tolerance over its surface and, secondly, to hold the structure in that flat form while the glue cures or is cured. The additional pressure is applied, preferably, in a vacuum pressure jig. Preferably, spacers similar to those (130) used within the glue layer may be placed between the optical substrate 100 and the flat reference slab 110 in order to avoid entrapment of air or contact with unwanted particulate contamination present on the surface of the slab 110. Either occurrence would tend to disturb the flatness of the finished combiner assembly as the supplementary pressure is applied.

Referring to Figure 1e, a small section of the combiner is shown in a sectional view with the cover plate 135 settled as far as it can under gravitational forces and the glue spread substantially to the edges of the cover plate 135. The structure, including the reference slab 110, has been placed in a vacuum pressure jig 140 designed to apply an even supplementary pressure, preferably of approximately 2 kPa or less, over the surface of the cover plate 135. The preferred layer of spacer particles disposed between the optical substrate 100 and the reference slab 110 is not shown in Figure 1e. The supplementary pressure is maintained by the jig 140 while the glue spreads to the corners of the cover plate 135, if it had not already done so at stage three under the weight of the cover plate 135 alone, and the glue layer 145 reaches a thickness equal to the spacer particle size, preferably a thickness of between 45 and 50µm. The jig 140 maintains the pressure on the cover plate 135 for as long as required for the glue to cure or to be cured, e.g. by the application of heat or UV light through the cover plate 135, according to the type of glue used.

When the glue layer 145 has cured, the assembled combiner may be removed from the jig 140 and cleaned.

The spacers 130 ensure that the cover plate 135 is not only flat but also parallel to the optical substrate by the end of this preferred manufacturing process, to a degree that depends ultimately upon the statistical variation in the spacer particle size and the evenness in the density of their distribution within the glue layer. The flatness of the structure may also depend upon the effectiveness with which the glue spreads evenly between the cover plate 135 and the diffraction grating layer 105.

Simple mechanical beam bending theory predicts that, for a 2mm thick cover plate 135 made from silica and with an applied pressure of 2kPa in the jig 140, the preferred maximum deviation of 5µm from flatness may be achieved with a spacer particle separation of up to 25mm within the glue layer. This density is equivalent to one spacer particle in approximately 270mm² or approximately 172 spacer particles on a typical 260mm x 180mm optical substrate. The spacer particle density may be reduced further while still achieving the desired degree of flatness, but at lower spacer particle densities the statistical variation in spacer particle size becomes more critical to achieving the required degree of flatness for the cover plate 135, in particular.

Preferably, to help to prevent glue overflowing when it reaches the edges of the cover plate 135 at stage three or stage four, the edges of the optical substrate 100 and the cover plate 135 may be bevelled such that when they come together the bevelled edges are adjacent and provide a reservoir which tends to retain the glue within the structure. Referring to Figure 2, a sectional view of an edge of the optical substrate 100 and the cover plate 135 is shown with each having a bevelled edge 200, 205 respectively. The size of the bevel may be a little as 0.5mm to have the effects required. As can be seen in Figure 2, a glue "fillet" 210 forms in the reservoir formed by the bevelled edges 200, 205 which tends to limit further flow, and hence overflow of glue from the glue layer 145 when the glue reaches the edges. In particular, where the glue spreads to the edge of the cover plate 135 more quickly in some regions than others, the reservoir provided by the bevelled edges tends to prevent the earlier-arriving glue from dripping out, so remaining in the reservoir to be channelled along the edges and drawn back into unfilled areas in the glue layer 145 by surface tension of the glue fillet 210 in the later stages of spreading.

In an alternative approach to avoiding an overspill of glue, the optical substrate 100 may be made slightly larger than the cover plate 135 so that when the cover plate 135 settles into its final position at stage three, centralised on the optical substrate 100, a protruding annular region of the surface of the optical substrate 100 surrounds the cover plate 135. Any excess glue emerging from the edge of the cover plate 135 remains on the protruding annular surface of the optical substrate 100. The protruding annular region of the optical substrate 100 is preferably cut away when the glue has cured.

Whereas, at stage one above, the glue deposits 120 were applied to the surface of the diffraction grating layer 105, the glue deposits may alternatively be applied to the surface of the cover plate 135. Preferably, spacer particles 130, particularly plastic spacer particles 130, may be mixed with the glue before the glue is deposited. This ensures, in particular, that there are spacer particles 135 present in the regions of the initial glue deposits 120 after spreading of the glue.

In a second preferred embodiment of the present invention, stages one and two of the method are modified to use spacer particles 130 made from glue, preferably of the same glue as that used to bond the cover plate 135, so that the refractive index of the spacers and the glue is substantially identical. The glue spacers are thus substantially invisible within the glue layer 145 in the assembled combiner. Furthermore, as the glue spacers are bonded to the surface of the cover plate 135, there is no variation of the density of spacers through the glue layer 145 as the glue spreads during stages three and four of the method, in contrast to the corresponding steps in the method of the first embodiment above.

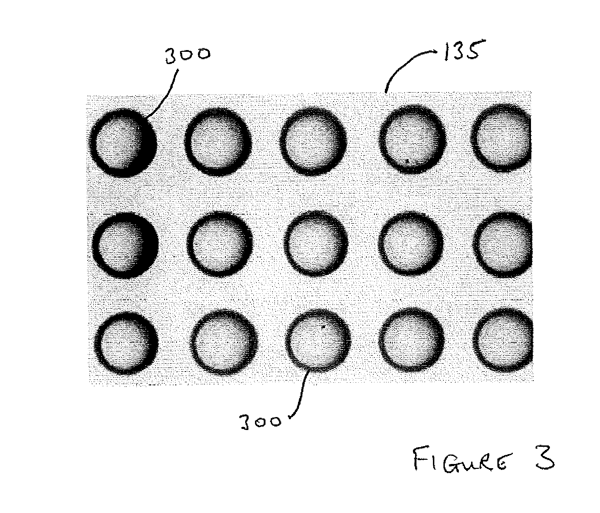

Referring to Figure 3 and according to this second preferred embodiment, at stage one of the method, glue drops 300 are applied uniformly across the surface of the cover plate 135 using a known type of printer, for example one supplied by the company Microfab Technologies Inc. using technology described, for example, in US patent number 5,681,757, to deposit small qualities of a liquid onto a surface. Figure 3 shows such glue drops 300 covering a small portion of the surface of a cover plate 135. Glue drops 300 deposited by this device are of substantially identical size. Preferably a UV-cured glue is used so that the glue drops 300 may be quickly cured without any significant change of shape. The result is an even distribution of glue drops 300 of a size that is suitable for use as spacer particles 130 in the present method. Concerns over the density of spacer particles are therefore eliminated and this technique offers an opportunity to minimise the number of spacers used.

At stage two of the method according to this second embodiment, having cured the glue drop spacers 300 on the cover plate 135, a number of discrete deposits of a liquid glue are applied substantially as in step one of the method according to the first embodiment described above, to the surface of the diffraction grating layer 105. The liquid glue is preferably of the same type as that used to create the glue drop spacers 300, or a glue with substantially the same refractive index. The glue deposits may be placed for example along a centre line of the surface of the diffraction grating layer 105.

Having provided a layer of glue spacers on the cover plate 135 and some deposits of liquid glue, the third and fourth steps of the method according to this second embodiment of the present invention proceed substantially as for the corresponding steps three and four of the first embodiment described above and will not be described again here.

During execution of step four in the method according to the first and second embodiments above, the shape of the combiner structure may be monitored using interferometry techniques while curing the glue. This ensures that any unwanted irregularities in the flatness of the structure are detected, e.g. due to an oversized spacer particle deforming the cover plate 135.

A further alternative method for applying liquid glue to the diffraction grating layer surface or to the cover plate in step one of the method according to the first embodiment or step two in the method according to the second embodiment involves spin-coating of glue across the respective surface. However, care is required to ensure that air is not trapped when applying the cover plate in step three of the method, e.g. by deforming the cover plate slightly before application so that contact is made progressively from a central region to the outer regions as the cover plate settles onto the spacers.

The diffraction grating layer 105 used in combiners is generally very delicate and may be particularly vulnerable to environmental damage, particularly physical damage and damage by water. The methods of manufacture according to the present invention take account of the needs to protect the grating layer 105 at each stage. In particular, plastic spacers have been selected in preferred embodiments, partly for the purpose of matching the refractive index of the spacers to that of the glue as far as possible, but also to reduce the likelihood of damage to the delicate grating layer 105 that might otherwise be a concern if using glass spacers, for example. The use of glue spacers in the second embodiment provides further immunity to grating layer damage in that the spacers are not free to move laterally relative to the grating layer surface during manufacture.

Whereas preferred embodiments of the present invention have been described in the context of a combiner for a display device, the techniques described above according to preferred embodiments of the present invention may be applied to the bonding of any multi-layer structure for an optical device where it is important to achieve and maintain flatness and even spacing of layers. In particular, the present invention may be applied to the bonding of layers of the same or different thicknesses, of the same or different materials and of two or more layers, as would be apparent to a person of ordinary skill in the relevant art.

## Claims

1. A method for manufacturing a combiner for a display device, wherein the combiner comprises a flat optical substrate, a cover plate and a grating layer applied to the flat optical substrate or to the cover plate, the method comprising the steps of:
(i) applying a predetermined volume of glue to a bonding surface of the optical substrate;
(ii) applying a plurality of spacer particles of sizes within a predetermined size range onto the bonding surface of the optical substrate;
(iii) bringing the cover plate into contact with the glue such that the weight of the cover plate causes the glue to spread uniformly over the bonding surface of the flat optical substrate to form said layer of glue and whereupon said cover plate is separated from said flat optical substrate by said plurality of spacer particles; and
(iv) curing the glue.

2. The method according to claim 1, wherein at step (i) said predetermined volume of the glue is applied initially as a plurality of discrete drops onto a central region of the flat optical substrate.

3. The method according to claim 2, wherein at step (i) said plurality of discrete drops are deposited substantially along a centre-line of the bonding surface of the flat optical substrate.

4. The method according to claim 2 or claim 3, wherein at step (ii) said spacer particles are deposited onto the bonding surface of the flat optical substrate before the glue is permitted to spread.

5. The method according to any one of claims 2 to 4, wherein at step (i) a plurality of spacer particles are mixed with the glue before the glue is applied to the bonding surface of the flat optical substrate.

6. The method according to any one of the preceding claims, wherein said spacer particles are substantially spherical.

7. The method according to any one of claims 1 to 6, wherein said spacer particles are rod-shaped.

8. The method according to any one of the preceding claims wherein the spacer particles are made from plastic.

9. The method according to any one of the preceding claims, wherein the glue and the spacer particle material are selected to have substantially similar refractive indices.

10. The method according to claim 1, wherein at step (ii) said spacer particles comprise glue drops of a predetermined volume that have been deposited onto the surface of the optical substrate, or of the cover plate, and cured.

11. The method according to claim 11, wherein said glue drops are deposited by means of a printing device.

12. The method according to any one of the preceding claims, wherein the spacer particles are of a diameter substantially in the range of 45 to 50µm

13. The method according to any one of the preceding claims, wherein the range of spacer particle sizes varies by no more that 5µm.

14. The method according to any one of the preceding claims, wherein the flat optical substrate is supported by a flat reference surface during manufacture of the combiner.

15. The method according to claim 14, wherein a plurality of spacer particles are disposed between the flat optical substrate and the flat reference surface.

16. The method according to claim 14 or claim 15, wherein step (iv) further comprises applying supplementary pressure evenly across the cover plate while curing the glue.

17. The method according to any one of the preceding claims, further comprising providing a bevelled edge to each of the optical substrate and the cover plate to provide a channel for capturing glue emerging from the edges of the cover plate and to direct the emerging glue to regions where glue has not reached the edge of the cover plate.

18. A combiner for a display device, comprising a flat optical substrate, a cover plate and a grating layer applied to the flat optical substrate or to the cover plate, wherein the cover plate is bonded to the flat optical substrate by means of a layer of glue containing spacer particles of sizes substantially within a predetermined size range, the thickness of the layer of glue is substantially within the predetermined size range of the spacer particles and the spacer particles are distributed within the layer of glue with a predetermined maximum spacing.
